(19) Europäisches Patentamt
European Patent Office
Office européen des brevets

(11) EP 3 886 216 A1

(12) **EUROPEAN PATENT APPLICATION**
published in accordance with Art. 153(4) EPC

(43) Date of publication:
**29.09.2021 Bulletin 2021/39**

(21) Application number: **19886913.3**

(22) Date of filing: **21.11.2019**

(51) Int Cl.:
***H01M 4/36*** *(2006.01)* ***H01M 4/505*** *(2010.01)*
***H01M 4/525*** *(2010.01)* ***H01M 4/58*** *(2010.01)*
***H01M 4/62*** *(2006.01)* ***H01M 10/052*** *(2010.01)*
***H01M 10/0562*** *(2010.01)*

(86) International application number:
**PCT/JP2019/045545**

(87) International publication number:
**WO 2020/105695 (28.05.2020 Gazette 2020/22)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **21.11.2018 JP 2018218263**

(71) Applicant: **Sekisui Chemical Co., Ltd.**
**Osaka-shi, Osaka 530-0047 (JP)**

(72) Inventors:
- **SUN, Ren-de**
  **Mishima-gun, Osaka 618-0021 (JP)**
- **FUKUI, Hiroji**
  **Mishima-gun, Osaka 618-0021 (JP)**
- **NAKASUGA, Akira**
  **Mishima-gun, Osaka 618-0021 (JP)**
- **SAWADA, Yuuki**
  **Mishima-gun, Osaka 618-0021 (JP)**

(74) Representative: **Cabinet Beau de Loménie**
**158, rue de l'Université**
**75340 Paris Cedex 07 (FR)**

(54) **ACTIVE MATERIAL FOR ALL-SOLID-STATE BATTERY, ELECTRODE FOR ALL-SOLID-STATE BATTERY, AND ALL-SOLID-STATE BATTERY**

(57) The present invention provides an active material for all-solid-state batteries that enables production of all-solid-state batteries having excellent battery characteristics. The present invention also provides an electrode for all-solid-state batteries and an all-solid-state battery each including the active material for all-solid-state batteries. Provided is an active material for all-solid-state batteries, including: an active material; and a coating layer containing amorphous carbon and coating a surface of the active material, the coating layer coating at least part of the surface of the active material.

FIG.1

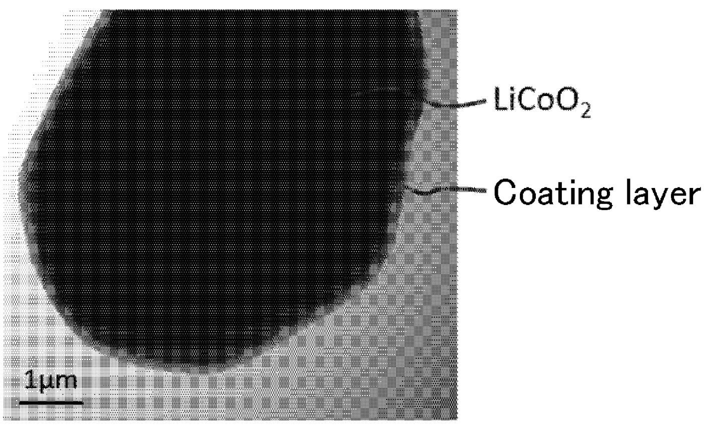


EP 3 886 216 A1

## Description

TECHNICAL FIELD

The present invention relates to an active material for all-solid-state batteries that enables production of all-solid-state batteries having excellent battery characteristics. The present invention also relates to an electrode for all-solid-state batteries and an all-solid-state battery each including the active material for all-solid-state batteries.

BACKGROUND ART

In recent years, various power storage devices have been actively developed, including non-aqueous electrolyte secondary batteries such as lithium ion secondary batteries. Lithium ion secondary batteries, which have high energy densities and provide high voltage, are particularly commonly used as batteries of laptop computers, cellular phones, and the like. A typical lithium ion secondary battery is composed of a positive electrode, a liquid organic electrolyte, a negative electrode, and a separation membrane (separator) positioned between the positive electrode and the negative electrode. The positive electrode used is obtained by fixing, onto a surface of a metallic foil (current collector), an electrode mixture containing a lithium ion-containing positive electrode active material, a conductive aid, and an organic binder, for example. The negative electrode used is obtained by fixing, onto a surface of a metallic foil, an electrode mixture containing a negative electrode active material capable of intercalating and deintercalating lithium ions, a conductive aid, and an organic binder, for example.
Unfortunately, lithium ion secondary batteries including liquid organic electrolytes may suffer electrolyte leakage from the batteries or ignition due to short circuit. There is thus a demand for improved safety.
In response to such situation, all-solid-state batteries have been developed, which use solid electrolytes composed of materials such as inorganic materials or polymer materials instead of liquid organic electrolytes (for example, Non-Patent Literature 1).
Active materials used for all-solid-state batteries include lithium transition metal composite oxides such as lithium cobalt oxide. However, these active materials have high electric resistance and insufficient electrical conductivity.
To counter such situation, Patent Literature 1 discloses that a positive electrode material having a surface at least partially coated with a carbon material has improved electrical conductivity.
Patent Literature 2 discloses that voltage abnormalities can be reduced by use of a negative electrode mixture containing powder of a specific material and powder of an ionically conductive material, wherein the specific material has an average particle size of 10 $\mu$m or smaller and can store alkali metal and/or alkaline earth metal during charging and release the metals during discharging.

CITATION LIST

- Non-Patent Literature

Non-Patent Literature 1: OGUMI Zempachi, Ed., "Richiumu Niji Denchi (Lithium Secondary Battery)", Ohmsha Ltd., March 2008, pp. 163-175

- Patent Literature

Patent Literature 1: JP 2012-048890 A
Patent Literature 2: JP 2013-69416 A

SUMMARY OF INVENTION

- Technical problem

Even an all-solid-state battery including the material disclosed in Patent Literature 1 may have insufficient initial coulombic efficiency or insufficient cycle characteristics.
Even an all-solid-state battery including the material disclosed in Patent Literature 2 may have low initial coulombic efficiency and low cycle characteristics, failing to achieve high-rate, stable charge and discharge.
In view of the situation described above, the present invention aims to provide an active material for all-solid-state batteries that enables production of all-solid-state batteries having excellent battery characteristics. The present

invention also aims to provide an electrode for all-solid-state batteries and an all-solid-state battery each including the active material for all-solid-state batteries.

- Solution to problem

The present invention relates to an active material for all-solid-state batteries, including: an active material; and a coating layer containing amorphous carbon and coating a surface of the active material, the coating layer coating at least part of the surface of the active material.

The present invention is described in detail below.

As a result of intensive studies, the present inventors assumed that a major cause of the low initial coulombic efficiency, low cycle characteristics, and low rate characteristics is insufficient electronic conductivity between the active materials or insufficient ionic conductivity between the active material and the solid electrolyte as a result of poor bonding between the active materials or between the active material and the solid electrolyte. As a result of further studies based on the assumption, the inventors found out that forming a coating layer with a specific structure on a surface of an active material can provide an active material for all-solid-state batteries that can improve the bonding between the active materials and the bonding at the interface between the active material and the solid electrolyte. The inventors thus completed the present invention.

The active material for all-solid-state batteries of the present invention includes an active material and a coating layer containing amorphous carbon and coating a surface of the active material.

Examples of the active material include positive electrode active materials and negative electrode active materials.

The positive electrode active material may be any active material that is more "noble", i.e., has a higher battery reaction potential, than the negative electrode active material described later. In this case, the battery reaction involves Group 1 or Group 2 ions. Examples of such ions include H ions, Li ions, Na ions, K ions, Mg ions, Ca ions, and Al ions. In the following, the battery reaction system in which Li ions are involved is specifically described.

Examples of the positive electrode active material in the battery reaction system in which Li ions are involved include lithium metal oxides, lithium sulfide, and sulfur.

Examples of lithium metal oxides include those having a spinel structure, a layered rock-salt structure, or an olivine structure.

Examples of lithium metal oxides include compounds containing one or both of the following: at least one selected from the group consisting of lithium cobalt oxide ($LiCoO_2$), lithium nickel oxide ($LiNiO_2$), lithium manganese oxide ($LiMn_2O_4$), lithium cobalt manganese oxide ($LiMnCoO_4$), lithium cobalt phosphate ($LiCoPO_4$), lithium manganese chromium oxide ($LiMnCrO_4$), lithium nickel vanadium oxide ($LiNiVO_4$), nickel-substituted lithium manganese oxide (e.g., $LiMn_{1.5}Ni_{0.5}O_4$), lithium cobalt vanadium oxide ($LiCoVO_4$), and lithium iron phosphate ($LiFePO_4$); and at least one selected from the group consisting of non-stoichiometric compounds obtained by replacing a portion of any of the above compositions with a metal element. The metal element may be, for example, at least one selected from the group consisting of Mn, Mg, Ni, Co, Cu, Zn, Al, and Ge.

Examples of non-stoichiometric compounds obtained by replacing a portion of any of the above compositions with a metal element include ternary positive electrode active materials such as $LiNi_{1-x-y}Co_xMn_yO_2$ and $LiNi_8Co_{1.5}Al_{0.5}O_2$. In $LiNi_{1-x-y}Co_xMn_yO_2$, x satisfies $0.1 \leq x \leq 0.4$ and y satisfies $0.1 \leq y \leq 0.4$.

In particular, at least one selected from the group consisting of lithium cobalt oxide, lithium nickel oxide, lithium manganese oxide, and lithium iron phosphate is preferred.

The positive electrode active material may be in a particle form, a flake form, a fiber form, a tubular form, a sheet form, or a porous form, for example. In particular, to increase the packing density of the positive electrode active material, the positive electrode active material is preferably in a particle form or a flake form.

The lower limit of the average particle size of the positive electrode active material in a particle form is preferably 0.02 $\mu$m, more preferably 0.05 $\mu$m, still more preferably 0.1 $\mu$m, and the upper limit thereof is preferably 40 $\mu$m, more preferably 30 $\mu$m, still more preferably 20 $\mu$m.

The negative electrode active material may be any active material that is "less noble", i.e., has a lower battery reaction potential, than the positive electrode active material described above. In this case, the battery reaction involves Group 1 or Group 2 ions. Examples of such ions include H ions, Li ions, Na ions, K ions, Mg ions, Ca ions, and Al ions. In the following, the battery reaction system in which Li ions are involved is specifically described.

Examples of the negative electrode active material in the battery reaction system in which Li ions are involved include metals, metal compounds, carbon materials, and organic compounds.

Examples of metals include Li, Mg, Ca, Al, Si, Ge, Sn, Pb, As, Sb, Bi, Ag, Au, Zn, Cd, Hg, Ti, and In. From the standpoint of the volume energy density and the weight energy density, preferred among them are Li, Al, Si, Ge, Sn, Ti, Pb, and In, with Li, Si, Sn, and Ti being more preferred. Si and Sn are still more preferred because they have higher reactivity with lithium ions. Any one of the metals may be used alone, or an alloy containing two or more of the metals

may be used. Alternatively, two or more metals may be mixed. For more improved stability, an alloy containing any of the above metals and a metal other than the above metals, or a metal doped with a non-metal element such as P or B may be used.

Examples of metal compounds include metal oxides, metal nitrides, and metal sulfides. From the standpoint of further enhancement of stability, metal oxides are preferred. Preferred metal oxides are silicon oxide, tin oxide, titanium oxide, tungsten oxide, niobium oxide, and molybdenum oxide because they have higher reactivity with lithium ions.

The "titanium oxide" herein includes lithium titanium oxide and $H_2Ti_{12}O_{25}$.

Any one of the metal compounds may be used alone, or a compound of an alloy containing two or more metals may be used. Alternatively, two or more metal compounds may be mixed. For more improved stability, a metal compound doped with a different metal or a non-metal element such as P or B may be used.

The negative electrode active material is preferably a silicon-containing compound. Examples of the silicon-containing compound include Si, silicon-containing alloys, and silicon oxide.

The negative electrode active material may be in a particle form, a flake form, a fiber form, a tubular form, a sheet form, or a porous form, for example. In particular, to increase the packing density of the negative electrode active material, the negative electrode active material is preferably in a particle form or a flake form.

The lower limit of the average particle size of the negative electrode active material in a particle form is preferably 0.001 μm, more preferably 0.005 μm, still more preferably 0.01 μm. The upper limit thereof is preferably 40 μm, more preferably 30 μm, still more preferably 10 μm, particularly preferably 1.0 μm.

The active material for all-solid-state batteries of the present invention includes a coating layer containing amorphous carbon. The presence of the coating layer can improve the bonding between the active materials and between the active material and the solid electrolyte, thus improving electronic conductivity and ionic conductivity.

The coating layer can be produced by a simple process without the need for a high-temperature firing process.

The coating layer is formed on at least part of the surface of the active material. To further exhibit the coating effect, the coating layer is preferably formed such that it coats the entire surface of the active material.

The coating layer more preferably has high denseness. In the present invention, formation of a coating layer having high denseness can further improve the bonding between the active materials and between the active material and the solid electrolyte, thus further improving electronic conductivity and ionic conductivity.

Although there is no strict definition of the "denseness" for the dense coating layer, "dense" in the present invention is defined as follows: when individual nanoparticles are observed using a high resolution transmission electron microscope, as shown in Fig. 1, the coating layer on the particle surface is clearly observed and the coating layer is continuously formed.

The amorphous carbon constituting the coating layer has an amorphous structure in which a sp2 bond and a sp3 bond are both present, and includes carbon. Preferably, the peak intensity ratio of G band to D band obtained from the Raman spectrum is 1.0 or higher.

In the analysis of the amorphous carbon by Raman spectroscopy, two peaks including G band (at around 1,580 $cm^{-1}$) corresponding to the sp2 bond and D band (at around 1,360 $cm^{-1}$) corresponding to the sp3 bond can be clearly observed. In the case where the carbon material is crystalline, either one of the two bands is minimized. For example, in the case of a monocrystalline diamond, G band at around 1,580 $cm^{-1}$ is hardly observed. In contrast, in the case of a highly pure graphite structure, D band at around 1,360 $cm^{-1}$ hardly appears.

In the present invention, particularly when the peak intensity ratio of G band to D band (peak intensity of G band/peak intensity of D band) is 1.5 or higher, the formed amorphous carbon film has high denseness and also has an excellent suppressing effect on sintering between particles at high temperature.

When the peak intensity ratio is lower than 1.0, the film has insufficient density and an insufficient suppressing effect on sintering between particles at high temperature. In addition, the film has reduced adhesiveness and reduced strength.

The peak intensity ratio is preferably 1.2 or higher and is preferably 10 or lower.

The peak intensity ratio of G band to D band may be adjusted by a method such as adjusting the heating temperature in heat treatment or selecting appropriate raw materials for the amorphous carbon. Specifically, increasing the heating temperature in heat treatment tends to increase the peak intensity of G band.

For the amorphous carbon constituting the coating layer, the upper limit of the half width of the G band peak obtained from the Raman spectrum is preferably 200 $cm^{-1}$, more preferably 180 $cm^{-1}$. The lower limit of the half width is not limited; the smaller the lower limit, the better.

The upper limit of the density of the coating layer is preferably 2.0 $g/cm^3$, more preferably 1.8 $g/cm^3$. The lower limit of the density is not limited, but is preferably 0.5 $g/cm^3$.

The density can be determined by X-ray reflectometry, for example.

The amorphous carbon constituting the coating layer is preferably derived from carbon contained in an oxazine resin. The oxazine resin can be carbonized at low temperature and therefore allows cost reduction.

The oxazine resin is a resin commonly classified as a phenolic resin and is a thermosetting resin obtainable

by reacting a phenol and formaldehyde as well as an amine. In the case where the phenol used is of a type further having an amino group on the phenol ring, such as p-aminophenol, no amine needs to be added in the reaction and the oxazine resin tends to be easily carbonized. In terms of carbonization, the use of a naphthalene ring instead of a benzene ring further facilitates carbonization.

Examples of the oxazine resin include benzoxazine resin and naphthoxazine resin. Among these, preferred is naphthoxazine resin because it can be carbonized at the lowest temperature. The structure of the oxazine resin is partly shown below by the formula (1) representing a partial structure of the benzoxazine resin and the formula (2) representing a partial structure of the naphthoxazine resin.

The oxazine resin refers to a resin having a six-membered ring added to a benzene ring or naphthalene ring. The six-membered ring includes oxygen and nitrogen, which is the origin of the name.

[Chem. 1]

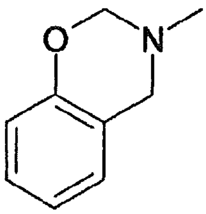

··· (1)

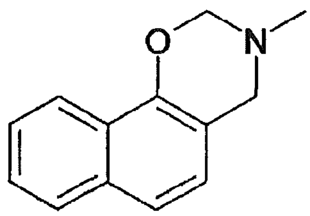

··· (2)

The use of the oxazine resin enables formation of an amorphous carbon film at remarkably low temperature compared to the case where other resins such as an epoxy resin are used. Specifically, the oxazine resin can be carbonized at a temperature of 200°C or lower. In particular, the naphthoxazine resin can be carbonized at further lower temperature.

As above, carbonization at lower temperature by using an oxazine resin enables formation of a coating layer containing amorphous carbon and having high denseness.

The reason why a coating layer containing amorphous carbon and having high denseness can be formed is not clarified. However, it is presumably because, in the case where naphthoxazine resin is used as an oxazine resin, for example, the naphthalene structures in the resin are locally connected by heating at low temperature and a layered structure at the molecular level is formed. The layered structure without being subjected to high-temperature treatment is not developed to the long-distance periodic structure like the graphite structure and therefore shows no crystallinity.

Whether the obtained carbon has a graphite-like structure or an amorphous structure can be confirmed by determining whether a peak is detected at a position where 2θ is 26.4° by an X-ray diffraction method described later.

Examples of the material usable as a raw material of the naphthoxazine resin include dihydroxy naphthalene, which is a phenol, formaldehyde, and an amine. These materials will be specifically described later.

The amorphous carbon is preferably one obtainable by heat-treating the oxazine resin at a temperature of 150°C to 800°C. In the present invention, the use of naphthoxazine resin, which can be carbonized at low temperature, enables preparation of amorphous carbon at relatively low temperature.

Preparation at low temperature is advantageous in that amorphous carbon can be produced at a lower cost in a simple process compared to a conventional one.

The heat treatment temperature is more preferably 200°C to 600°C.

The coating layer may contain an element other than carbon. Examples of the element other than carbon include nitrogen, hydrogen, and oxygen. The amount of such an element is preferably 10 atom% or less relative to the total of carbon and the element other than carbon.

The coating layer preferably contains a nitrogen atom. The coating layer containing a nitrogen atom can have better physical properties than pure carbon coating.

The lower limit of the nitrogen content of the coating layer is preferably 0.05 atom%, more preferably 0.1 atom%, and the upper limit thereof is preferably 5.0 atom%, more preferably 3.0 atom%.

The coating layer having a nitrogen content in the above range can have even better physical properties.

The nitrogen content can be measured by X-ray photoelectron spectroscopy. The details of the nitrogen content measurement by X-ray photoelectron spectroscopy are as described later in Examples.

The lower limit of the amount of the coating layer in the active material for all-solid-state batteries of the present invention is preferably 0.5% by weight, more preferably 1% by weight, and the upper limit thereof is preferably 50% by weight, more preferably 30% by weight, still more preferably 20% by weight, particularly preferably 15% by weight.

The amount of the coating layer can be measured by thermogravimetric analysis (TG-DTA).

The upper limit of the average thickness of the coating layer is preferably 200 nm, more preferably 170 nm. The lower limit of the average thickness is preferably 0.5 nm, more preferably 1 nm.

The coating layer having an average thickness within the above range can provide good bonding between the active materials and between the active material and the solid electrolyte. As a result, good initial coulombic efficiency and good long-term cycle characteristics can be obtained.

The average thickness can be measured using a transmission microscope (FE-TEM), for example.

The upper limit of the average thickness of the coating layer relative to the particle size of the active material is preferably 1/2, more preferably 1/3 and the lower limit thereof is preferably 1/2,000, more preferably 1/1,000.

The coating layer preferably has a coefficient of variation (CV value) of thickness of 20% or less.

The coating layer having a CV value of thickness of 20% or less is uniform and has less variation in thickness. Such a coating layer can impart desired functions (ionic conductivity and electronic conductivity) even when it is thin.

The upper limit of the CV value of the thickness of the coating layer is more preferably 15%. The lower limit thereof is not limited and is preferably 0.5%.

The CV value (%) of the thickness is a value in percentage obtained by dividing the standard deviation by the average thickness and is a numerical value obtained by the following equation. A smaller CV value means smaller variation in thickness. CV value (%) of thickness = (standard deviation of thickness/average thickness) $\times$ 100

The average thickness and standard deviation can be measured using, for example, FE-TEM.

When the active material is in a particle shape, the lower limit of the ratio of the average thickness of the coating layer to the average particle size of the active material (the average thickness of the coating layer/the average particle size of the active material) is preferably 0.0001, more preferably 0.005, and the upper limit thereof is preferably 1.0, more preferably 0.5.

The coating layer preferably has good adhesiveness to the active material. Although there is no clear definition of "adhesiveness", the coating layer preferably does not peel off even when the active material is treated with mechanical dispersing or mixing means (e.g., ultrasound, a mixer, a jet mill) for uniform mixing with a solid electrolyte or a carbon material as a conductive aid during production of a positive electrode or negative electrode of an all-solid-state battery.

In the present invention, in analysis of the coating layer by time-of-flight secondary ion mass spectrometry (TOF-SIMS), at least one of a mass spectrum derived from the benzene ring or a mass spectrum derived from the naphthalene ring is preferably detected.

Detection of such mass spectra derived from the benzene ring and naphthalene ring confirms that the carbon constituting the coating layer is derived from the carbon contained in the oxazine resin.

The mass spectrum derived from the benzene ring herein refers to a mass spectrum at around 77.12 and the mass spectrum derived from the naphthalene ring herein refers to a mass spectrum at around 127.27.

The above analysis can be performed using a TOF-SIMS device (available from ION-TOF GmbH), for example.

In the present invention, in analysis of the coating layer by an X-ray diffraction method, no peak is preferably detected at a position where 2$\theta$ is 26.4°.

The peak at a position where 2$\theta$ is 26.4° is the crystalline peak of graphite. The absence of a peak at such a position indicates that the carbon constituting the coating layer has an amorphous structure.

The above analysis can be performed using, for example, an X-ray diffractometer (SmartLab Multipurpose available from Rigaku Corporation).

The active material for all-solid-state batteries of the present invention preferably further includes, on a surface of the coating layer, an electrically conductive material that is more electrically conductive than the amorphous carbon in the coating layer.

The electrically conductive material may coat the entire coating layer or may be attached to part of the coating layer.

The electrically conductive material is preferably attached to at least 1/4 of the surface of the coating layer.

The above structure further improves battery characteristics, especially rate characteristics.

The lower limit of the amount of the electrically conductive material in the active material for all-solid-state batteries of the present invention is preferably 0.5% by weight, more preferably 1.0% by weight and the upper limit thereof is preferably 40% by weight, more preferably 30% by weight, still more preferably 20% by weight.

The electrically conductive material in an amount within the above range can further improve the battery characteristics of the resulting all-solid-state battery.

When the electrically conductive material coats at least part of the coating layer containing amorphous carbon, the lower limit of the thickness of the layer containing the electrically conductive material is preferably 0.5 nm, more preferably 1.0 nm, and the upper limit thereof is preferably 100 nm, more preferably 80 nm, still more preferably 50 nm.

The layer with a thickness in the above range can further improve the battery characteristics of the resulting all-solid-state battery.

The electrically conductive material is not limited as long as it is more electrically conductive than amorphous carbon. Examples of preferred electrically conductive materials include nanocarbon materials such as carbon nanoparticles, carbon quantum dots, graphene quantum dots, multilayer graphene, single-layer graphene, graphene-like carbon, nano-sized graphite, reduced graphene oxide, and flake graphite. More preferred among them are carbon nanoparticles and graphene quantum dots.

The electrically conductive material preferably has a volume resistivity of $5.0 \times 10^{-2}$ Ω·cm or lower.

The volume resistivity can be measured using a powder resistivity meter, for example.

The electrically conductive material preferably has an electrical conductivity of $2.0 \times 10$ S/cm or higher.

The electrical conductivity can be measured using a powder resistivity meter, for example.

The lower limit of the ratio of the electrical conductivity of the active material for all-solid-state batteries according to the present invention to the electrical conductivity of the uncoated active material (the electrical conductivity of the active material for all-solid-state batteries/the electrical conductivity of the active material) is preferably 1.2.

The active material for all-solid-state batteries having an electrical conductivity within the above range allows an all-solid-state battery to have better battery characteristics.

The lower limit of the electrical conductivity ratio is more preferably 1.5. The upper limit of the electrical conductivity ratio is not limited; the higher the upper limit, the better.

The electrical conductivity can be measured using a powder resistivity measurement system (produced by Mitsubishi Chemical Analytech, MCP-PD51 model) at a load of 16 kN. The details of the electrical conductivity measurement method are as described later in Examples.

The active material for all-solid-state batteries of the present invention may be produced by a method including: preparing a mixed solution containing formaldehyde, an aliphatic amine, and dihydroxy naphthalene; adding an active material to the mixed solution and reacting the mixed solution; and performing heat treatment at a temperature of 150°C to 800°C.

Alternatively, the method for producing the active material for all-solid-state batteries of the present invention may use two components, namely, 1,3,5-trialkylhexahydro-1,3,5-triazine and dihydroxynaphthalene, instead of the above three components i.e., formaldehyde, aliphatic amine, and dihydroxynaphthalene.

The 1,3,5-trialkylhexahydro-1,3,5-triazine may contain C1-C20 aliphatic alkyl groups or C1-C20 aromatic alkyl groups as the alkyl groups therein. From the standpoint of film formability, the 1,3,5-trialkylhexahydro-1,3,5-triazine preferably contains aliphatic alkyl groups.

In the method for producing the active material for all-solid-state batteries of the present invention, a step of preparing a mixed solution containing formaldehyde, an aliphatic amine, and dihydroxy naphthalene is preferably carried out.

Since the formaldehyde is unstable, formalin, which is a formaldehyde solution, is preferably used. Formalin normally contains, in addition to formaldehyde and water, a small amount of methanol as a stabilizer. The formaldehyde used in the present invention may be formalin as long as the formaldehyde content is clear.

Paraformaldehyde may be mentioned as a polymerization form of formaldehyde. Paraformaldehyde is also usable as a raw material but is poor in reactivity. Formalin mentioned above is thus preferably used.

The aliphatic amine is represented by the formula $R\text{-}NH_2$, and R in the formula is preferably an alkyl group having a carbon number of 20 or less. Examples of the alkyl group having a carbon number of 20 or less include, but not limited to, methyl, ethyl, n-propyl, isopropyl, cyclopropyl, n-butyl, isobutyl, s-butyl, t-butyl, cyclobutyl, cyclopropylmethyl, n-pentyl, cyclopentyl, cyclopropylethyl, cyclobutylmethyl, hexyl, dodecyl, and octadecyl groups.

Since a smaller molecular weight is preferred, the substituent R is preferably a methyl, ethyl, or propyl group. Preferred actual compounds include methylamine, ethylamine, and propylamine. Most preferred is methylamine, which has a smallest molecular weight.

Dihydroxy naphthalene has many isomers. Examples thereof include 1,3-dihydroxy naphthalene, 1,5-dihydroxy naphthalene, 1,6-dihydroxy naphthalene, 1,7-dihydroxy naphthalene, 2,3-dihydroxy naphthalene, 2,6-dihydroxy naphthalene, and 2,7-dihydroxy naphthalene.

Among these, preferred are 1,5-dihydroxy naphthalene and 2,6-dihydroxy naphthalene for their high reactivity. Moreover, 1,5-dihydroxy naphthalene is preferred because it has highest reactivity.

The ratio of the three components of dihydroxy naphthalene, an aliphatic amine, and formaldehyde in the mixed solution is most preferably 1 to 2 mol of an aliphatic amine and 2 to 4 mol of formaldehyde relative to 1 mol of dihydroxy naphthalene.

The optimum compounding ratio may not be strictly the above ratio because the raw materials could be lost by volatilization or the like during the reaction according to the reaction conditions. Preferably, an aliphatic amine and formaldehyde are compounded in amounts of 0.8 to 2.2 mol and 1.6 to 4.4 mol, respectively, relative to 1 mol of dihydroxy naphthalene.

With the amount of the aliphatic amine of 0.8 mol or more, the oxazine ring can be sufficiently formed and polymerization favorably proceeds. With the amount of the aliphatic amine of 2.2 mol or less, formaldehyde needed for the reaction is not excessively consumed and therefore the reaction proceeds smoothly, leading to preparation of desired naphthoxazine. Similarly, with the amount of formaldehyde of 1.6 mol or more, the oxazine ring can be sufficiently formed

and polymerization favorably proceeds.

With the amount of formaldehyde of 4.4 mol or less, a side reaction is favorably reduced.

The mixed solution preferably contains a solvent for dissolving and reacting the three raw materials.

Examples of the solvent include solvents commonly used for dissolving resin, such as alcohols (e.g., methanol, ethanol, and isopropanol), tetrahydrofuran, dioxane, dimethylformamide, dimethylacetamide, dimethylsulfoxide, and N-methylpyrrolidone.

The amount of the solvent in the mixed solution is not limited. Commonly, in the case where the amount of the raw materials including dihydroxy naphthalene, an aliphatic amine, and formaldehyde is 100 parts by mass, the amount of the solvent is preferably 300 to 20,000 parts by mass. When the amount of the solvent is 300 parts by mass or more, the solutes can be sufficiently dissolved in the solvent and therefore a uniform film can be obtained in formation of a film. When the amount of the solvent is 20,000 parts by mass or less, the concentration required for formation of a coating layer can be ensured.

In the method for producing the active material for all-solid-state batteries of the present invention, a step of adding an active material to the mixed solution and reacting the mixed solution is carried out. As the reaction proceeds, a naphthoxazine resin layer can be formed on the surface of the active material.

The reaction can proceed at normal temperature. For shortening of the reaction time, heating to 40°C or higher is preferred. Continuous heating opens the formed oxazine ring, and the molecular weight increases along with the polymerization. Thus, what is called polynaphthoxazine resin is prepared. Attention should be paid to the reaction because excessive proceeding of the reaction increases the viscosity of the solution and such a solution is not suitable for forming a coating layer.

Alternatively, for example, the active material may be added after the mixed solution of formaldehyde, an aliphatic amine, and dihydroxy naphthalene is reacted for a certain period of time.

For uniform coating of the particles, the particles are preferably in a dispersed state during the coating reaction. The dispersion method may be any known method such as stirring, ultrasound treatment, and rotation. For a better dispersion state, an appropriate dispersant may be added.

Moreover, the surface of the active material may be uniformly coated with the resin by drying and removing the solvent with hot air or the like after the reaction step. Any heat drying method may be employed.

In the method for producing the active material for all-solid-state batteries of the present invention, a step of performing heat treatment at a temperature of 150°C to 800°C is subsequently carried out.

Through this step, the coating resin obtained in the previous step is carbonized to be formed into a coating layer containing amorphous carbon.

Any heat treatment method may be employed, and examples thereof include a method of using a heating oven or an electric furnace.

The heat treatment may be performed in the air or in an inert gas such as nitrogen or argon. In the case of the heat treatment temperature of 250°C or higher, the heat treatment is more preferably performed in an inert gas atmosphere.

When the active material for all-solid-state batteries of the present invention further includes an electrically conductive material on the surface of the coating layer, the electrically conductive material may be attached to the surface of the coating layer by a wet method or a dry method.

An exemplary wet method includes adding the electrically conductive material to a dispersion of the active material particles having an amorphous carbon-containing coating layer obtained by the above method, and treating the dispersion for example using ultrasound, a mixer, or a mill (e.g., a ball mill, a planetary mill). Another method that can be used includes adding the active material particles having an amorphous carbon-containing coating layer obtained by the above method to a disperion containing the electrically conductive material, followed by treatment with ultrasound, for example. In ultrasound treatment, the frequency is preferably 20 to 100 kHz, and the treatment time is preferably 10 minutes to 10 hours.

An exemplary dry method includes treating a mixture of the active material particles having an amorphous carbon-containing coating layer obtained by the above method and the electrically conductive material or a precursor material for the electrically conductive material in a mixer, a mill (e.g., a ball mill, a planetary mill), or the like. In treatment in a mill, balls as dispersing media may be optionally added, or may not be added. For example, when the active material particles used (e.g., positive electrode material) have a particle size in the order of microns or larger and a specific gravity higher than that of the electrically conductive material or its precursor material, the active material particles themselves serve as ball media, so that the structure in which the electrically conductive material is attached to the surface of the coating layer can be obtained by the mechanical energy of the mill without adding any ball medium. For example, when flake graphite or multilayer graphene as the electrically conductive material is attached to amorphous carbon-coated lithium cobalt oxide, the amorphous carbon-coated lithium cobalt oxide is blended with graphite particles as a precursor material at a predetermined ratio and treated in a planetary mill. At this time, frictional interaction causes exfoliation of the graphite into multilayer graphene, and the multilayer graphene is attached to the surface of the coating layer containing

amorphous carbon. At this time, the size and the number of layers of the multilayer graphene can be adjusted by adjusting the size of the graphite as the precursor material or the rotation rate and time during the treatment. In this case, since no ball media such as zirconia balls are added, it can be avoided that the treatment lowers the crystallinity of the active material such as lithium cobalt oxide.

In contrast, for an active material having a small particle size, low specific gravity, or low hardness (e.g., Si negative electrode), adding ball media allows more efficient formation of the coating layer of the electrically conductive material.

The active material for all-solid-state batteries of the present invention is useful for applications such as industrial, consumer, and automotive all-solid-state batteries.

An electrode for all-solid-state batteries and an all-solid-state battery can be produced using the active material for all-solid-state batteries of the present invention and a solid electrolyte.

The prevent invention also encompasses an electrode for all-solid-state batteries including the active material for all-solid-state batteries of the present invention and a solid electrolyte.

The electrode for all-solid-state batteries of the present invention includes at least the active material for all-solid-state batteries of the present invention and a solid electrolyte.

The electrode containing the active material for all-solid-state batteries of the present invention can improve the electronic conductivity between the active materials and the ionic conductivity between the active material and the solid electrolyte, thus improving the battery characteristics of the resulting all-solid-state battery such as coulombic efficiency and cycle characteristics.

The solid electrolyte is not limited as long as it can conduct Group 1 or Group 2 ions in the periodic table in a battery reaction. Examples of such ions include H ions, Li ions, Na ions, K ions, Mg ions, Ca ions, and Al ions. In the following, the battery reaction system in which Li ions are involved is specifically described.

Examples of the solid electrolyte in the battery reaction system in which Li ions are involved include inorganic solid electrolytes and organic solid electrolytes.

Examples of inorganic solid electrolytes include sulfide solid electrolytes and oxide solid electrolytes. Examples of organic solid electrolytes include polymer solid electrolytes.

The sulfide solid electrolyte is a compound containing at least lithium and sulfur. Examples thereof include compounds represented by $Li_1X_mS_n$. Here, X is at least one element other than Li and S, and 1, m, and n are within the range of $0.5 \leq 1 \leq 10$, the range of $0 \leq m \leq 10$, and the range of $1 \leq n \leq 10$, respectively.

A structure in which m in the formula is not 0 is preferred because a sulfide solid electrolyte with such a structure has better stability and better lithium ion conductivity.

X is preferably at least one of a Group 12 element, a Group 13 element, a Group 14 element, a Group 15 element, a Group 16 element, or a Group 17 element. To improve the stability of the sulfide solid electrolyte, X is more preferably at least one selected from the group consisting of Zn, Al, Si, P, Ge, Sn, Sb, Cl, and I. Here, X may be one element or two or more elements.

In the formula, 1 satisfies $0.5 \leq l \leq 10$.

With 1 being within the range, good lithium ion conductivity can be obtained.

To further improve the lithium ion conductivity, 1 preferably satisfies $0.5 \leq l \leq 8$.

To further improve the stability of the solid electrolyte, m and n more preferably satisfy $1 \leq m \leq 6$ and $1 \leq n \leq 6$, respectively.

Examples of the sulfide solid electrolyte include $Li_2S$-$P_2S_5$ electrolytes, LiI-$Li_2S$-$P_2S_5$ electrolytes, LiI-$Li_2S$-$B_2S_3$ electrolytes, LiI-$Li_2S$-$SiS_2$ electrolytes, and thiosilicon electrolytes.

LGPS electrolytes typified by $Li_{10+\delta}M_{1+\delta}P_{2-\delta}S_{12}$ ($0 \leq \delta \leq 0.35$, M = Ge, Si, Sn) and $Li_{9.54}M_{1.74}P_{1.44}S_{11.7}Cl_{0.3}$ (M = Ge, Si, Sn) or argyrodite electrolytes typified by $Li_{7-\sigma}PS_{6-\sigma}Cl_{\sigma}$ ($0 < \sigma < 1.8$) may also be used. These electrolytes have high lithium ion conductivity.

Preferred sulfide solid electrolytes are (A)$Li_2S$-(1 - A)$GeS_2$, (A)$Li_2S$-(B)$GeS_2$-(1 - A - B)ZnS, (A)$Li_2S$-(1-A)$Ga_2S_2$, (A) (B)$Li_2S$-(C)$GeS_2$-(1 - A - B - C)$Ga_2S_3$, (A)$Li_2S$-(B)$GeS_2$-(1 - A - B)$P_2S_5$, (A)$Li_2S$-(B)$GeS_2$-(1 - A - B) $Sb_2S_5$, (A)$Li_2S$-(B)$GeS_2$-(1 - A - B)$Al_2S_3$, (A)$Li_2S$-(1 - A) $SiS_2$, (A)$Li_2S$-(1-A) $P_2S_5$, (A)$Li_2S$-(1 - A) $Al_2S_3$, (A)$Li_2S$-(B) $SiS_2$-(1 - A - B)$Al_2S_3$, (A)$Li_2S$-(B)$SiS_2$-(1 - A - B) $P_2S_5$, $Li_{10+\delta}M_{1+\delta}P_{2-6}S_{12}$ ($0 \leq \delta \leq 0.35$, M = Ge, Si, Sn), $Li_{9.54}M_{1.74}P_{1.44}S_{11.7}Cl_{0.3}$ (M = Ge, Si, Sn), and $Li_{7-\sigma}PS_{6-\sigma}Cl_{\sigma}$ ($0 < \sigma < 1.8$) because these electrolytes have higher stability and higher lithium ion conductivity and also facilitate electrode production. Here, A, B, and C are numbers that satisfy $0 \leq A < 1$, $0 \leq B < 1$, $0 \leq C < 1$, and $A + B + C < 1$.

From the standpoint of higher stability and higher lithium ion conductivity of the solid electrolyte and ease of electrode production, particularly preferred is $Li_2S$-$P_2S_5$, $Li_2S$-$GeS_2$, or $Li_2S$-SiS, or $Li_{10+\delta}M_{1+\delta}P_{2-\delta}S_{12}$ ($0 \leq \delta \leq 0.35$, M = Ge, Si, Sn) or $Li_{9.54}M_{1.74}P_{1.44}S_{11.7}Cl_{0.3}$ (M = Ge, Si, Sn), or $Li_{7-\sigma}PS_{6-\sigma}Cl_{\sigma}$ ($0 < \sigma < 1.8$).

The oxide solid electrolyte is a compound containing at least lithium and oxygen. Examples thereof include phosphoric acid compounds having a NASICON structure or substitution products obtained by replacing a portion of any of the phosphoric acid compounds with other element(s). Examples of oxide solid electrolytes that can also be used

include lithium ion conductors having a garnet structure or a garnet-like structure such as $Li_7La_3Zr_2O_{12}$ lithium ion conductors and lithium ion conductors having a perovskite structure or a perovskite-like structure such as Li-La-Ti-O lithium ion conductors.

Specific examples of the oxide solid electrolyte include $Li_7La_3Zr_2O_{12}$, $Li_7La_3Zr_{2-k}Nb_kO_{12}$, $Li_7La_3Zr_{2-k}Ta_kO_{12}$, $Li_5La_3Ta_2O_{12}$, $Li_{0.33}La_{0.55}TiO_3$, $Li_{1.5}Al_{0.5}Ge_{1.5}P_3O_{12}$, $Li_{1.3}Al_{0.3}Ti_{1.7}P_3O_{12}$, $Li_3PO_4$, $Li_4SiO_4$-$Li_3PO_4$, $Li_4SiO_4$, and $Li_3BO_3$ wherein k satisfies $0 < k < 2$.

The solid electrolyte may contain a trace amount of an element other than these elements.

Examples of polymer solid electrolytes include polyethylene oxide, polypropylene oxide, and polyethylene glycol.

The electrode for all-solid-state batteries of the present invention preferably contains a conductive aid in order to improve electronic conductivity and ionic conductivity.

Examples of the conductive aid include carbon materials such as graphene and graphite.

For easier formation of the electrode for all-solid-state batteries, the electrode for all-solid-state batteries of the present invention may contain a binder.

The binder is not limited, and may be at least one resin selected from the group consisting of polyvinylidene fluoride (PVdF), polytetrafluoroethylene (PTFE), styrenebutadiene rubber, polyimide, and derivatives of these.

Examples of the method for producing the electrode for all-solid-state batteries of the present invention include: a method including mixing the active material for all-solid-state batteries of the present invention, the solid electrolyte, and the conductive aid, followed by molding the mixture; a method including producing a composite of the active material for all-solid-state batteries of the present invention and the conductive aid, followed by mixing the composite with the solid electrolyte and molding the mixture; and a method including producing a composite of the active material for all-solid-state batteries of the present invention and the conductive aid, followed by mixing the composite with the conductive aid and molding the mixture.

The active material-conductive aid composite may be produced by a wet method or a dry method.

The wet method may be performed as follows, for example. First, a dispersion of a carbon material as the conductive aid in a solvent (hereinafter referred to as a carbon material dispersion) is produced. Subsequently, a dispersion of the active material in a solvent (hereinafter referred to as an active material dispersion) is produced separately from the above dispersion. Then, the carbon material dispersion and the active material dispersion are mixed. Finally, the solvent is removed from the dispersion mixture containing the carbon material and the active material, whereby a composite of the active material to be used for an electrode and the carbon material is produced.

Alternatively, the wet method may be performed by adding the active material to the carbon material dispersion to produce a dispersion containing the carbon material and active material, and then removing the solvent therefrom, or may be performed by mixing a mixture of the carbon material, the active material, and the solvent in a mixer.

The solvent for dispersing the active material or the conductive aid may be any of an aqueous solvent, a non-aqueous solvent, a mixed solvent of aqueous and non-aqueous solvents, or a mixed solvent of different non-aqueous solvents. The solvent for dispersing the conductive aid and the solvent for dispersing the active material may be the same as or different from each other. The solvents different from each other are preferably compatible with each other.

The non-aqueous solvent is not limited. For easy dispersion, it may be a non-aqueous solvent such as an alcohol solvent typified by methanol, ethanol, and propanol, tetrahydrofuran, or N-methyl-2-pyrrolidone. To further improve dispersibility, the solvent may contain a dispersant such as a surfactant.

The method for dispersing the active material or the conductive aid is not limited. Examples of the method include dispersion with ultrasound, dispersion in a mixer, dispersion in a jet mill, or dispersion with a stirrer bar.

With regard to the ratio between the active material and the conductive aid in the active material-conductive aid composite, the composite preferably contains 0.2 parts by weight or more and 100 parts by weight or less of the conductive aid relative to 100 parts by weight of the active material.

To further improve rate characteristics, the composite more preferably contains 0.3 parts by weight or more and 80 parts by weight or less of the conductive aid relative to 100 parts by weight of the active material.

To further improve cycle characteristics, the composite still more preferably contains 0.5 parts by weight or more and 50 parts by weight or less of the conductive aid relative to 100 parts by weight of the active material.

The active material-solid electrolyte composite may be produced by, for example, a method including mixing the active material and the solid electrolyte in a mixer or a method including mixing by mechanical milling.

Any mixer may be used. Examples thereof include planetary mixers, dispersers, thin film spin mixers, jet mixers, and planetary centrifugal mixers.

The mechanical milling may be performed using a ball mill, a bead mill, or a rotary kiln, for example.

In the method for producing the active material-solid electrolyte composite, heat treatment may be performed to improve the adhesiveness between the active material and the solid electrolyte.

The electrode may be molded by, for example, a method including mixing the active material and the solid electrolyte using a mixer or mechanical milling, followed by press-molding.

In the press molding, the electrode may be molded alone. When the electrode is the positive electrode, it may

be pressed together with the solid electrolyte and negative electrode described later.

Especially when an oxide solid electrolyte is used, heat treatment may be performed after molding in order to further improve the moldability of the solid electrolyte.

With regard to the ratio between the active material for all-solid-state batteries of the present invention and the solid electrolyte in the electrode for all-solid-state batteries of the present invention, the electrode preferably contains 0.1 parts by weight or more and 200 parts by weight or less of the solid electrolyte relative to 100 parts by weight of the active material for all-solid-state batteries of the present invention. The electrode containing 0.1 parts by weight or more of the solid electrolyte facilitates the formation of electron conduction paths and lithium ion conduction paths. The electrode containing 200 parts by weight or less of the solid electrolyte can sufficiently improve the energy density of the all-solid-state battery.

The electrode for all-solid-state batteries of the present invention may have any thickness. The lower limit thereof is preferably 10 μm and the upper limit thereof is preferably 1,000 μm.

The electrode having a thickness of 10 μm or more can sufficiently improve the capacity of the resulting all-solid-state battery. The electrode having a thickness of 1,000 μm or less can sufficiently improve power density.

When the electrode for all-solid-state batteries of the present invention is the positive electrode, the lower limit of the electric capacity per $cm^2$ of the positive electrode is 0.5 mAh and the upper limit thereof is preferably 100 mAh.

The positive electrode having an electric capacity of 0.5 mAh or higher makes it possible to avoid increasing the volume of the battery to obtain desired capacity. The electrode having an electric capacity of 100 mAh or lower can provide suitable power density.

To obtain a better relation between the battery volume and the power density, the electric capacity per $cm^2$ of the positive electrode is more preferably 0.8 mAh or higher and 50 mAh lower, still more preferably 1.0 mAh or higher and 20 mAh or lower.

The electric capacity per $cm^2$ of the positive electrode can be calculated by producing a half-cell using lithium metal as a counter electrode after producing the positive electrode for all-solid-state batteries, and measuring the charge/discharge characteristics.

The positive electrode for all-solid-state batteries may have any electric capacity per $cm^2$ of the positive electrode. The electric capacity can be controlled by controlling the weight of the positive electrode formed per unit area of the current collector.

The all-solid-state battery of the present invention includes a positive electrode, a solid electrolyte, and a negative electrode.

The positive electrode or the negative electrode may be the electrode for all-solid-state batteries of the present invention.

The negative electrode may be lithium metal or a lithium alloy.

The all-solid-state battery of the present invention may be produced by, for example, a method including interposing the solid electrolyte between the positive electrode and the negative electrode after the positive electrode and negative electrode are produced, and pressing them together. After pressing, heat treatment may be performed to promote integration at the interfaces.

The all-solid-state battery of the present invention includes a coating layer containing amorphous carbon on the surface(s) of the positive electrode active material and/or the negative electrode active material, and thus has improved electronic conductivity between the active materials and improved ion conduction between the active material and the solid electrolyte, providing excellent battery characteristics such as excellent cycle characteristics.

- Advantageous Effects of Invention

The present invention can provide an active material for all-solid-state batteries that enables production of all-solid-state batteries having excellent battery characteristics. The present invention can also provide an electrode for all-solid-state batteries and an all-solid-state battery each including the active material for all-solid-state batteries.

BRIEF DESCRIPTION OF DRAWINGS

Fig. 1 is a cross-sectional photograph (electron micrograph) of a positive electrode active material for all-solid-state batteries obtained in Example 1.

Fig. 2 is a cross-sectional photograph (electron micrograph) of a negative electrode active material for all-solid-state batteries obtained in Example 3.

DESCRIPTION OF EMBODIMENTS

Embodiments of the present invention are more specifically described with reference to, but not limited to, the following examples.

(Example 1)

(Production of positive electrode active material for all-solid-state batteries)

First, 0.48 g of 1,5-dihydroxynaphthalene (produced by Tokyo Chemical Industry Co., Ltd.) was dissolved in 100 mL of ethanol to produce a solution A. Separately, 0.39 g of 1,3,5-trimethylhexahydro-1,3,5-triazine (produced by Tokyo Chemical Industry Co., Ltd.) was dissolved in 100 mL of ethanol to produce a solution B.

The solution B was added dropwise to the solution A over 10 minutes, followed by stirring for 30 minutes. Then, 3.0 g of positive electrode active material particles were added, and reaction was performed with stirring at 60°C for four hours. After reaction, the solution was filtered, and the obtained particles were washed with ethanol three times and then vacuum-dried at 100°C for three hours. The dried particles were then heated at 550°C for two hours, whereby a positive electrode active material (A) for all-solid-state batteries was obtained.

The positive electrode active material used was lithium cobalt oxide [$LiCoO_{2]}$ (average particle size 15 μm). The electrical conductivity and volume resistivity were measured by powder resistivity measurement (device: MCP-PD51 model, produced by Mitsubishi Chemical Analytech) by placing 4.5 g of the positive electrode active material in the measurement cell and applying a load of 16 kN. The electrical conductivity was $2.0 \times 10^{-4}$ S/cm, and the volume resistivity was $5.0 \times 10^{3}$ Ω·cm.

Cross-sectional photographs of the coating layers of random 20 particles of the obtained positive electrode active material (A) for all-solid-state batteries were taken with a FE-TEM. On the obtained cross-sectional photographs, thicknesses at different 10 sites were randomly measured for each particle, and the average thickness and the standard deviation were calculated. The coefficient of variation (CV value) of thickness was calculated from the obtained values. The average thickness was 30 nm, and the CV value of thickness was 7%.

The obtained positive electrode active material (A) for all-solid-state batteries was analyzed by Raman spectroscopy using Almega XR (produced by Thermo Fisher Scientific). The peak intensity ratio of G band to D band was 1.56. The laser light was at 530 nm.

The elemental composition of the coating layer was analyzed with an X-ray photoelectron spectroscopy (device: X-ray photoelectron spectroscope (XPS), PHI 5000 VersaProbe III, produced by ULVAC-PHI, Inc.). The coating layer had a nitrogen content of 1.2 atom%.

The electrical conductivity and volume resistivity of the positive electrode active material (A) for all-solid-state batteries were measured as in the measurement of the electrical conductivity and volume resistivity of the lithium cobalt oxide. The electrical conductivity was $3.2 \times 10^{-4}$ S/cm, and the volume resistivity was $3.1 \times 10^{3}$ Ω·cm.

The coating layer was also analyzed with an X-ray diffractometer (SmartLab Multipurpose, produced by Rigaku Corporation) under the following conditions: X-ray wavelength: CuKα 1.54 A, measurement range: $2\theta$ = 10 to 70°, scan rate: 4°/min, step: 0.02°. No peak was detected at the position of $2\theta$ = 26.4°, confirming that the particles were coated with amorphous carbon.

Fig. 1 shows a cross-sectional photograph of the obtained positive electrode active material for all-solid-state batteries.

(Production of sulfide solid electrolyte)

$Li_2S$ (produced by Furuuchi Chemical Corporation) and $P_2S_5$ (produced by Aldrich) were weighed out at a mole ratio of 4:1 in a glovebox (produced by Miwa Manufacturing Co., Ltd.) with an argon atmosphere.

Subsequently, the weighed materials were placed in a zirconia pot together with zirconia balls in a planetary ball mill (produced by Fritsch, P-6 model), and subjected to mechanical milling at a rotation rate of 540 rpm for nine hours in an argon atmosphere.

Thereafter, the powder was separated from the zirconia balls, whereby $0.8Li_2S\text{-}0.2P_2S_5$ powder, which was a sulfide solid electrolyte, was produced.

(Production of all-solid-state battery positive electrode)

First, 2.4 g of the obtained positive electrode active material (A) for all-solid-state batteries and 0.6 g of a conductive aid were mixed in a planetary stirrer (THINKY MIXER, produced by Thinky Corporation) at a rotation rate of 2,000 rpm for four minutes, whereby a positive electrode active material-conductive aid composite was obtained. The

conductive aid used was acetylene black (produced by Denka Company Limited.), which was a carbon material.

Subsequently, the composite and the obtained sulfide solid electrolyte were mixed at a weight ratio of 80:20 by mechanical milling (planetary ball mill, P-6 model, produced by Fritsch, rotation rate of 380 rpm, one hour), whereby positive electrode active material-conductive aid-solid electrolyte mixed powder was obtained.

Then, 25 mg of the obtained mixed powder was placed in a SUS mold (diameter: 10 mm) and press-molded at 360 Mpa, whereby a positive electrode (thickness: 0.5 mm) was produced. The process from the weighing of the materials to press molding and the storage of the positive electrode were conducted in an argon atmosphere with a dew point of - 60°C or lower.

(Production of all-solid-state battery negative electrode)

First, 2.1 g of a negative electrode active material and 0.9 g of a conductive aid were mixed in a planetary stirrer (THINKY MIXER, produced by Thinky Corporation) at a rotation rate of 2,000 rpm for four minutes, whereby a negative electrode active material-conductive aid composite was obtained. The negative electrode active material used was Si powder (average particle size 100 nm). The conductive aid used was acetylene black (produced by Denka Company Limited.), which was a carbon material. The electrical conductivity and volume resistivity of the Si powder were measured in the same manner as described for the electrical conductivity and volume resistivity of lithium cobalt oxide except that the amount of the active material added to the measurement cell was 0.5 g. The electrical conductivity was $6.2 \times 10^{-7}$ S/cm, and volume resistivity was $1.6 \times 10^{6}$ Ω·cm.

Subsequently, the composite and the obtained sulfide solid electrolyte were mixed at a weight ratio of 50:50 by mechanical milling (planetary ball mill, P-6 model, produced by Fritsch, rotation rate of 380 rpm, one hour), whereby a negative electrode active material-conductive aid-solid electrolyte mixed powder was obtained.

Then, 25 mg of the obtained mixed powder was placed in a SUS mold (diameter: 10 mm) and press-molded at 360 Mpa, whereby a negative electrode (thickness: 0.5 mm) was produced. The process from the weighing of the materials to press molding and the storage of the negative electrode were conducted in an argon atmosphere with a dew point of - 60°C or lower.

(Production of all-solid-state battery)

The positive electrode, solid electrolyte pellets (diameter 10 mm, thickness 500 μm), and the negative electrode were stacked in the stated order and set in an all-solid-state battery evaluation cell KP-SolidCell (Hohsen Corp.).

Subsequently, the cell was pressed from above and fastened with the screws. A pressure corresponding to 50 MPa was applied with a torque wrench to secure the components, whereby an all-solid-state battery was produced.

(Example 2)

(Production of positive electrode active material for all-solid-state batteries)

A four-neck flask having a capacity of 1 L was charged with 100 mL of ethanol and 3.0 g of a positive electrode active material, and placed in a thermostat at 70°C. The positive electrode active material used was lithium cobalt oxide [$LiCoO_{2]}$ (average particle size 15 μm).

1,5-Dihydroxynaphthalene (produced by Tokyo Chemical Industry Co., Ltd.) was added to ethanol at a concentration of 0.15 mol/L to produce a solution C. 1,3,5-Trimethylhexahydro-1,3,5-triazine (produced by Tokyo Chemical Industry Co., Ltd.) was added to ethanol at a concentration of 0.15 mol/L to produce a solution D.

After the active material/ethanol mixture reached 70°C, the solutions C and D were simultaneously added dropwise to the mixture, each at a drop rate of 2 mL/min. Thirty minutes later, the dropwise addition was terminated, and reaction was performed for one hour. Furthermore, the process of adding the solutions C and D dropwise again under the same conditions, terminating it 30 minutes later, and performing reaction for one hour was conducted five times. Thereafter, the solution was filtered, and the obtained particles were washed with ethanol three times and then vacuum-dried at 100°C for three hours. The dried particles were then heat-treated at 600°C for two hours, whereby a positive electrode active material (B) for all-solid-state batteries was obtained.

Measurements performed in the same manner as in Example 1 showed that the average thickness was 150 nm, the CV value of thickness was 15%, the peak intensity ratio of G band to D band was 1.70, the nitrogen content of the coating layer was 0.7 atom%, the electrical conductivity was $9.1 \times 10^{-4}$ S/cm, and the volume resistivity was $1.1 \times 10^{3}$ Ω·cm. No peak was detected at the position of $2\theta = 26.4°$.

(Production of positive electrode for all-solid-state batteries)

A positive electrode was produced as in Example 1 except that the positive electrode active material (A) for all-solid-state batteries was replaced with the obtained positive electrode active material (B) for all-solid-state batteries.

(Production of all-solid-state battery)

An all-solid-state battery was produced as in Example 1 except that the obtained positive electrode was used.

(Example 3)

(Production of negative electrode active material for all-solid-state batteries)

An amount of 0.72 g of 1,5-dihydroxynaphthalene (produced by Tokyo Chemical Industry Co., Ltd.), 0.36 g of 40% methylamine (produced by FUJIFILM Wako Pure Chemical Corporation), and 0.72 g of a 37% formaldehyde aqueous solution (produced by FUJIFILM Wako Pure Chemical Corporation) were sequentially dissolved in ethanol, whereby 300 g of an ethanol mixed solution was produced.

Subsequently, 6.0 g of negative electrode active material particles were added to the obtained mixed solution, and reaction was performed at 50°C for four hours while ultrasound and stirring were simultaneously applied to the solution. After reaction, the solution was filtered, and the obtained particles were washed with ethanol three times and then vacuum-dried at 100°C for 12 hours. The dried particles were then heat-treated at 500°C for two hours, whereby a negative electrode active material (A) for all-solid-state batteries was obtained.

The negative electrode active material used was Si powder (average particle size 100 nm).

Measurements performed in the same manner as in Example 1 showed that the average thickness was 5 nm, the CV value of thickness was 8%, the peak intensity ratio of G band to D band was 1.40, and the nitrogen content of the coating layer was 1.5 atom%. The electrical conductivity and volume resistivity were measured in the same manner as described for the Si powder. The electrical conductivity was $9.9 \times 10^{-7}$ S/cm, and the volume resistivity was $1.0 \times 10^{6}$ $\Omega$·cm. No peak was detected at the position of $2\theta$ = 26.4°.

Fig. 2 shows a cross-sectional photograph of the obtained negative electrode active material for all-solid-state batteries.

Separately, the ethanol mixed solution with no negative electrode active material particle added was reacted at 50°C for four hours while ultrasound and stirring were simultaneously applied to the solution. After reaction, the solution was filtered, and the obtained particles were washed with ethanol three times and then vacuum-dried at 100°C for 12 hours. The dried particles were then heat-treated at 500°C for two hours, whereby particles made of amorphous carbon were obtained.

The electrical conductivity and volume resistivity of the obtained particles made of amorphous carbon were measured in the same manner as above. The electrical conductivity was $2.0 \times 10^{-6}$ S/cm, and the volume resistivity was $5.0 \times 10^{5}$ $\Omega$·cm.

(Production of positive electrode for all-solid-state batteries)

A positive electrode was produced as in Example 1 except that the positive electrode active material (A) for all-solid-state batteries was replaced with lithium cobalt oxide [$LiCoO_2$] (average particle size 15 $\mu$m).

(Production of negative electrode for all-solid-state batteries)

A negative electrode was produced as in Example 1 except that the Si powder (average particle size 100 nm) was replaced with the obtained negative electrode active material (A) for all-solid-state batteries.

(Production of all-solid-state battery)

An all-solid-state battery was produced as in Example 1 except that the obtained positive electrode and negative electrode were used.

(Example 4)

(Production of all-solid-state battery)

An all-solid-state battery was produced as in Example 1 the negative electrode obtained in Example 3 was used.

(Example 5)

(Production of negative electrode active material for all-solid-state batteries)

An amount of 0.72 g of 1,5-dihydroxynaphthalene (produced by Tokyo Chemical Industry Co., Ltd.), 0.36 g of 40% methylamine (produced by FUJIFILM Wako Pure Chemical Corporation), and 0.72 g of a 37% formaldehyde aqueous solution (produced by FUJIFILM Wako Pure Chemical Corporation) were sequentially dissolved in ethanol, whereby 300 g of an ethanol mixed solution was produced.

Subsequently, 3.0 g of the negative electrode active material particles were added to the obtained mixed solution, and reaction was performed at 60°C for six hours while ultrasound and stirring were simultaneously applied to the solution. After reaction, the solution was filtered, and the obtained particles were washed with ethanol three times and then vacuum-dried at 100°C for 12 hours. The dried particles were then heat-treated at 500°C for 10 hours, whereby a negative electrode active material (B) for all-solid-state batteries was obtained.

The negative electrode active material used was Si powder (average particle size 100 nm).

Measurements performed in the same manner as in Example 1 showed that the average thickness was 15 nm, the CV value of thickness was 13%, the peak intensity ratio of G band to D band was 1.50, and the nitrogen content of the coating layer was 1.3 atom%. The electrical conductivity and volume resistivity were measured in the same manner as described for the Si powder. The electrical conductivity was $1.9 \times 10^{-6}$ S/cm, and the volume resistivity was $5.2 \times 10^5$ $\Omega$·cm. No peak was detected at the position of $2\theta$ = 26.4°.

(Production of negative electrode for all-solid-state batteries)

A negative electrode was produced as in Example 1 except that the Si powder (average particle size 100 nm) was replaced with the obtained negative electrode active material (B) for all-solid-state batteries.

(Production of all-solid-state battery)

An all-solid-state battery was produced as in Example 1 except that the obtained negative electrode was used.

(Example 6)

(Production of sulfide solid electrolyte)

$Li_2S$ (produced by Furuuchi Chemical Corporation), $P_2S_5$ (produced by Aldrich), and $GeS_2$ (produced by Aldrich) were weighed out at a mole ratio of 5:1:1 in a glovebox (produced by Miwa Manufacturing Co., Ltd.) with an argon atmosphere.

Subsequently, the weighed materials were placed in a zirconia pot together with zirconia balls in a planetary ball mill (produced by Fritsch, P-6 model), and subjected to mechanical milling at a rotation rate of 540 rpm for nine hours in an argon atmosphere.

After pelletization, the pellets were heat-treated at 550°C for eight hours, and gradually cooled to room temperature. The pellets were then pulverized, whereby $Li_{10}GeP_2S_{12}$ powder, which was a LGPS sulfide solid electrolyte, was produced.

(Production of positive electrode for all-solid-state batteries)

A positive electrode was produced as in Example 1 except that the $0.8Li_2S$-$0.2P_2S_5$ powder was replaced with the obtained sulfide solid electrolyte.

(Production of negative electrode for all-solid-state batteries)

A negative electrode was obtained as in Example 3 except that the $0.8Li_2S$-$0.2P_2S_5$ powder was replaced with the obtained sulfide solid electrolyte.

(Production of all-solid-state battery)

An all-solid-state battery was produced as in Example 1 except that the obtained positive electrode, negative electrode, and sulfide solid electrolyte were used.

(Example 7)

An all-solid-state battery was produced as in Examples 3 except that the lithium cobalt oxide [$LiCoO_2$] was replaced with a Li-In alloy in (Production of positive electrode for all-solid-state batteries).

(Example 8)

(Production of negative electrode active material for all-solid-state batteries)

Amorphous carbon-coated silicon particles were produced as in (Production of negative electrode active material for all-solid-state batteries) in Example 3.

Separately, 0.5 g of carbon black ("BLACK PEARLS 2000", produced by Cabot Corporation) was added to 500 mL of ethanol in which 0.5 g of 1,3,5-trimethylhexahydro-1,3,5-triazine had been dissolved, followed by ultrasound treatment for five hours. The obtained solution was then filtered, and the obtained solids were again dispersed in an appropriate amount of ethanol. After dispersion, 0.05-mm zirconia beads were added, and dispersing treatment was performed using a bead mill (produced by THINKY, "Nano Pulverizer NP-100") at a rotation rate of 2000 rpm for five hours. Thus, triazine-modified carbon nanoparticles were obtained. The obtained carbon nanoparticles were analyzed using a particle size distribution analyzer (dynamic light scattering (DLS) particle size analyzer "Nanotrac Wave II", produced by MicrotracBEL Corp.). The average particle size was 20 nm. The electrical conductivity and volume resistivity of the obtained particles were measured in the same manner as above. The electrical conductivity was $6.7 \times 10$ S/cm, and the volume resistivity was $1.5 \times 10^{-2}$ $\Omega\cdot$cm.

Subsequently, 0.5 g of the amorphous carbon-coated silicon particles were ultrasonically dispersed in 400 mL of ethanol to produce an A liquid. Separately, 0.05 g of the triazine-modified carbon nanoparticles were added to 200 mL of ethanol and ultrasonically dispersed to produce a B liquid. While ultrasound was applied to the A liquid, the B liquid was added to the A liquid at 5 mL/min. After the completion of the addition, ultrasound treatment was performed for an additional four hours. The dispersion was then filtered using a PTFE membrane filter (pore size 0.5 $\mu$m), whereby a negative electrode active material (C) for all-solid-state batteries was obtained as amorphous carbon-coated silicon particles carrying nanocarbon particles.

Observation of the negative electrode active material for all-solid-state batteries with a transmission electron microscope confirmed that nanocarbon particles were attached to the surfaces of the amorphous carbon-coated silicon particles.

The amorphous carbon-coated silicon particles were analyzed with a powder resistivity meter ("MCP-PD51", produced by Mitsubishi Chemical Analytech). However, the resistivity was unmeasurable because the resistivity at a load of 16 kN exceeded the measurement range (resistance $10^{-3}$ to $10^7$ $\Omega$, resistivity > $10^6$ $\Omega\cdot$cm). In contrast, analysis of the negative electrode active material for all-solid-state batteries showed that the volume resistivity at a load of 16 kN was $5.0 \times 10^{-1}$ $\Omega\cdot$cm, demonstrating that the electrical conductivity was greatly improved.

An all-solid-state battery was produced as in Example 7 except that the obtained negative electrode active material (C) for all-solid-state batteries was used.

(Example 9)

(Production of negative electrode active material for all-solid-state batteries)

Amorphous carbon-coated silicon particles were produced as in (Production of negative electrode active material for all-solid-state batteries) in Example 3.

Graphene quantum dots were produced by a solvothermal method. Specifically, 0.3 g of graphene oxide (produced by NiSiNa materials Co. Ltd.) was added to 70 mL of N,N-dimethylformamide (DMF), followed by ultrasound treatment for two hours. Thereafter, the dispersion was transferred into a stainless steel pressure-resistant container equipped with a 100-mL Teflon® cylinder, and heat treated at 200°C for 15 hours, whereby graphene quantum dots having an average particle size of 10 nm were obtained. The average particle size was measured in the same manner as described for the carbon nanoparticles in Example 8. The electrical conductivity and volume resistivity of the obtained graphene quantum dots were measured in the same manner as above. The electrical conductivity was $1.8 \times 10^2$ S/cm, and the volume resistivity was $5.5 \times 10^{-3}$ $\Omega\cdot$cm.

The amorphous carbon-coated silicon particles were added to the dispersion of the graphene quantum dots at a weight ratio (graphene quantum dots:amorphous carbon-coated silicon particles) of 1:10, followed by ultrasound treatment for four hours. The solvent was then removed, whereby a negative electrode active material (D) for all-solid-state batteries was obtained as amorphous carbon-coated silicon particles carrying graphene quantum dots.

Observation as in Example 8 confirmed that the graphene quantum dots were attached to the surfaces of the amorphous carbon-coated silicon particles.

An all-solid-state battery was produced as in Example 7 except that the obtained negative electrode active material (D) for all-solid-state batteries was used.

(Example 10)

(Production of negative electrode active material for all-solid-state batteries)

Amorphous carbon-coated silicon particles were produced as in (Production of negative electrode active material for all-solid-state batteries) in Example 3.

Subsequently, the surfaces of the amorphous carbon-coated silicon particles were further coated with multilayer graphene. Specifically, 5 g of the amorphous carbon-coated silicon particles, 0.5 g of expanded graphite (produced by Toyo Tanso Co., Ltd., product name "PF powder 8"), and 20 zirconia balls (Φ5 mm) were mixed, and treated in a planetary ball mill (Premium Line PL-7, produced by Fritsch) twice, each at a rotation rate of 500 rpm for 30 minutes. By the treatment, the expanded graphite particles became invisible, and uniform powder was obtained. This powder was used as a negative electrode active material (E) for all-solid-state batteries of this example.

Observation of the treated particles with a transmission electron microscope showed the presence of crystalline carbon (flake graphite) having a thickness of about 5 nm (corresponding to about 15 graphene layers) on the surfaces of the silicon particles. The crystallinity was determined based on an electron diffraction pattern. The Raman spectrum measured for the particles showed a strong G band, indicating that the crystalline carbon was derived from the expanded graphite. Moreover, in analysis using an X-ray diffractometer, a graphite-derived peak ($2\theta = 26.4°$) was observed.

The electrical conductivity and volume resistivity of the mixed powder treated in the planetary mill were measured in the same manner as above. The electrical conductivity was $8.3 \times 10^2$ S/cm, and the volume resistivity was $1.2 \times 10^{-3}$ Ω·cm.

The electrical conductivity of the expanded graphite PF powder 8 used was $2.1 \times 10^4$ S/cm, and the volume resistivity thereof was $4.8 \times 10^{-4}$ Ω·cm.

An all-solid-state battery was produced as in Example 7 except that the obtained negative electrode active material (E) for all-solid-state batteries was used.

(Comparative Example 1)

An all-solid-state battery was produced as in Example 1 except that the positive electrode obtained in Example 3 was used.

(Comparative Example 2)

A positive electrode, a negative electrode, and an all-solid-state battery were produced as in Comparative Example 1 except that the $0.8Li_2S-0.2P_2S_5$ powder was replaced with the sulfide solid electrolyte obtained in Example 6.

(Comparative Example 3)

An all-solid-state battery was produced as in Example 1 except that the positive electrode active material (A) for all-solid-state batteries was replaced with a Li-In alloy.

(Evaluation)

The all-solid-state batteries obtained in the examples and the comparative examples were evaluated as follows. Tables 1 and 2 show the results.

(Characteristics evaluation of all-solid-state battery)

(Examples 1 to 6 and Comparative Examples 1 and 2)

Each of the all-solid-state batteries obtained in the examples and the comparative examples was placed in a thermostat at 25°C and connected to a charge/discharge device (HJ1005SD8, produced by HOKUTO DENKO Corp.). Subsequently, a charge/discharge cycle was repeated 100 times under the following conditions.

Initial charge/discharge cycle: constant-current constant-voltage charge (current: 0.1 mA, charge cut-off voltage: 4.25 V, constant-voltage discharge voltage: 4.25 V, constant-voltage discharge cut-off condition: an elapsed time of 60 hours or a current of 0.01 mA), constant-current discharge (current: 0.1 mA, discharge cut-off voltage: 2.5 V)

Second and subsequent charge and discharge cycles: constant-current constant-voltage charge (current: 1 mA, charge cut-off voltage: 4.25 V, constant-voltage discharge voltage: 4.25 V, constant-voltage discharge cut-off condition: an elapsed time of 10 hours or a current of 0.1 mA), constant-current discharge (current: 1 mA, discharge cut-off voltage: 2.5 V)

The initial coulombic efficiency and the capacity retention (cycle characteristics) were calculated by the following equations.

[Initial coulombic efficiency (%) = (first discharge capacity/first charge capacity) × 100]

[Capacity retention (%) = (100th discharge capacity/1st discharge capacity) × 100]

The battery characteristics were evaluated according to the following criteria.

oo (Excellent): The initial coulombic efficiency was 65% or higher and the capacity retention was 80% or higher.
o (Good): The initial coulombic efficiency was 65% or higher and the capacity retention was lower than 80%, or the initial coulombic efficiency was lower than 65% and the capacity retention was 80% or higher.
× (Poor): The initial coulombic efficiency was lower than 65 % and the capacity retention was lower than 80%.

(Examples 7 to 10 and Comparative Example 3)

The charge/discharge cycle was repeated 10 times. The charge/discharge conditions were changed as follows.

Initial charge/discharge cycle: constant-current constant-voltage charge (current: 0.1 mA, charge cut-off voltage: -0.6 V, constant-voltage discharge voltage: -0.6 V, constant-voltage discharge cut-off condition: an elapsed time of 30 hours or a current 0.01 mA), constant-current discharge (current: 0.1 mA, discharge cut-off voltage: 0.9 V)

Second and subsequent charge/discharge cycles: constant-current constant-voltage charge (current: 1 mA, charge cut-off voltage: -0.6 V, constant-voltage discharge voltage: -0.6 V, constant-voltage discharge cut-off condition: an elapsed time of 10 hours or a current of 0.1 mA), constant-current discharge (current: 1 mA, discharge cut-off voltage: 0.9 V)

Separately, cycling was performed in the same manner except that the current in the second and subsequent charge/discharge cycles was set to 5 mA.

The initial coulombic efficiency, the capacity retention (cycle characteristics), and the rate characteristics were calculated by the following equations.

[Initial coulombic efficiency (%) = (first discharge capacity/first charge capacity) × 100]

[Capacity retention (%) = (10th discharge capacity/1st discharge capacity) × 100]

[Rate characteristics (%) = (capacity retention at 5 mA/capacity retention at 1 mA) × 100]

The battery characteristics were evaluated according to the following criteria.

oo (Excellent): The initial coulombic efficiency was 70% or higher and the capacity retention and the rate characteristics were 80% or higher.
o (Good): The initial coulombic efficiency was 70% or higher, and the capacity retention or the rate characteristics was/were lower than 80%.
× (Poor): The initial coulombic efficiency was lower than 70 % and the capacity retention or rate characteristics was/were lower than 80%.

[Table 1]

| | Positive electrode active material for all-solid-state batteries | | | | | Negative electrode active material for all-solid-state batteries | | | | | Solid electrolyte | Battery characteristics | | |
|---|---|---|---|---|---|---|---|---|---|---|---|---|---|---|
| | Composition | Presence or absence of coating | Average thickness of coating layer (nm) | CV value of thickness (%) | Electrical conductivity (S/cm) | Composition | Presence or absence of coating | Average thickness of coating layer (nm) | CV value of thickness (%) | Electrical conductivity (S/cm) | | Initial coulombic efficiency (%) | Capacity retention (%) | Evaluation |
| Example 1 | $LiCoO_2$ | Present | 30 | 7 | $3.2 \times 10^{-4}$ | Silicon | Absent | - | - | $6.2 \times 10^{-7}$ | $0-8Li_2S-0.2P_2S_5$ | 71 | 74 | ○ |
| Example 2 | $LiCoO_2$ | Present | 150 | 15 | $9.1 \times 10^{-4}$ | Silicon | Absent | - | - | $6.2 \times 10^{-7}$ | $0.8Li_2S-0.2P_2S_5$ | 68 | 71 | ○ |
| Example 3 | $LiCoO_2$ | Absent | - | - | $2.0 \times 10^{-4}$ | Silicon | Present | 5 | 8 | $9.9 \times 10^{-7}$ | $0.8Li_2S-0.2P_2S_5$ | 75 | 76 | ○ |
| Example 4 | $LiCoO_2$ | Present | 30 | 7 | $3.2 \times 10^{-4}$ | Silicon | Present | 5 | 8 | $9.9 \times 10^{-7}$ | $0.8Li_2S-0.2P_2S_5$ | 73 | 85 | ○○ |
| Example 5 | $LiCoO_2$ | Present | 150 | 15 | $9.1 \times 10^{-4}$ | Silicon | Present | 15 | 13 | $1.9 \times 10^{-6}$ | $0.8Li_2S-0.2P_2S_5$ | 75 | 88 | ○○ |
| Example 6 | $LiCoO_2$ | Present | 30 | 7 | $3.2 \times 10^{-4}$ | Silicon | Present | 5 | 8 | $9.9 \times 10^{-7}$ | $Li_{10}GeP_2S_{12}$ | 82 | 91 | ○○ |
| Comparative Example 1 | $LiCoO_2$ | Absent | - | - | $2.0 \times 10^{-4}$ | Silicon | Absent | - | - | $6.2 \times 10^{-7}$ | $0.8Li_2S-0.2P_2S_5$ | 50 | 56 | × |
| Comparative Example 2 | $LiCoO_2$ | Absent | - | - | $2.0 \times 10^{-4}$ | Silicon | Absent | - | - | $6.2 \times 10^{-7}$ | $Li_{10}GeP_2S_{12}$ | 58 | 62 | × |

[Table 2]

| | Negative electrode active material for all-solid-state batteries | | | | | | Positive electrode (counter electrode) | Solid electrolyte | Battery characteristics | | | |
|---|---|---|---|---|---|---|---|---|---|---|---|---|
| | Composition | Presence or absence of coating | Coating layer | | | Electrically conductive | | | Initial coulombic efficiency (%) | Capacity retention (%) | **Rate** characteristics (%) | Evaluation |
| | | | Average thickness of coating layer (nm) | CV value of thickness (%) | Nitrogen content (atom%) | | | | | | | |
| Example 7 | Silicon | Present | 5 | 8 | 0.87 | - | Li-In | $0.8Li_2S$-$0.2P_2S_5$ | 74 | 81 | 75 | ○ |
| Example 8 | Silicon | Present | 5 | 8 | 0.87 | Carbon nanoparticles | Li-In | $0.8Li_2S$-$0.2P_2S_5$ | 82 | 85 | 81 | ○○ |
| Example 9 | Silicon | Present | 5 | 8 | 0.87 | Graphene quantum dots | Li-In | $0\text{-}8Li_2S$-$0.2P_2S_5$ | 85 | 92 | 85 | ○○ |
| Example 10 | Silicon | Present | 5 | 8 | 0.87 | Flake graphite | Li-In | $0.8Li_2S$-$0.2P_2S_5$ | 86 | 95 | 90 | ○○ |
| Comparative Example 3 | Silicon | Absent | - | - | - | - | Li-In | $0.8Li_2S$-$0.2P_2S_5$ | 63 | 59 | 62 | × |

INDUSTRIAL APPLICABILITY

The present invention can provide an active material for all-solid-state batteries that enables production of all-solid-state batteries having excellent battery characteristics. The present invention can also provide an electrode for all-solid-state batteries and an all-solid-state battery each including the active material for all-solid-state batteries.

## Claims

**1.** An active material for all-solid-state batteries, comprising:

an active material; and
a coating layer containing amorphous carbon and coating a surface of the active material,
the coating layer coating at least part of the surface of the active material.

**2.** The active material for all-solid-state batteries according to claim 1,
wherein the coating layer contains a nitrogen atom and has an average thickness of 200 nm or less and a coefficient of variation (CV value) of thickness of 20% or less.

**3.** The active material for all-solid-state batteries according to claim 1 or 2, further including, on a surface of the coating layer, an electrically conductive material that is more electrically conductive than the amorphous carbon in the coating layer.

**4.** The active material for all-solid-state batteries according to claim 3,
wherein the electrically conductive material has a volume resistivity of $5.0 \times 10^{-2}$ Ω·cm or lower.

**5.** The active material for all-solid-state batteries according to claim 3 or 4,
wherein the electrically conductive material is a nanocarbon material.

**6.** The active material for all-solid-state batteries according to claim 5,
wherein the nanocarbon material is at least one selected from the group consisting of carbon nanoparticles, carbon quantum dots, graphene quantum dots, multilayer graphene, single-layer graphene, graphene-like carbon, nano-sized graphite, and reduced graphene oxide.

**7.** The active material for all-solid-state batteries according to any one of claims 1 to 6,
wherein a ratio of an electrical conductivity of the active material for all-solid-state batteries to an electrical conductivity of the active material (the electrical conductivity of the active material for all-solid-state batteries/the electrical conductivity of the active material) is 1.2 or higher.

**8.** The active material for all-solid-state batteries according to any one of claims 1 to 7,
wherein the active material is a positive electrode active material.

**9.** The active material for all-solid-state batteries according to claim 8,
wherein the positive electrode active material is a lithium metal oxide.

**10.** The active material for all-solid-state batteries according to claim 9,
wherein the lithium metal oxide is at least one selected from the group consisting of $LiCoO_2$, $LiNiO_2$, $LiMn_2O_4$, $LiMnCoO_4$, $LiCoPO_4$, $LiMnCrO_4$, $LiNiVO_4$, $LiMn_{1.5}Ni_{0.5}O_4$, $LiCoVO_4$, $LiFePO_4$, $LiNi_{1-x-y}Co_xMn_yO_2$ wherein x satisfies the relation $0.1 \leq x \leq 0.4$ and y satisfies the relation $0.1 \leq y \leq 0.4$, and $LiNi_8Co_{1.5}Al_{0.5}O_2$.

**11.** The active material for all-solid-state batteries according to any one of claims 1 to 7,
wherein the active material is a negative electrode active material.

**12.** The active material for all-solid-state batteries according to claim 11,
wherein the negative electrode active material is a silicon-containing compound.

**13.** An electrode for all-solid-state batteries, comprising:

the active material for all-solid-state batteries according to any one of claims 1 to 12; and
a solid electrolyte.

**14.** An all-solid-state battery comprising the electrode for all-solid-state batteries according to claim 13.

FIG.1

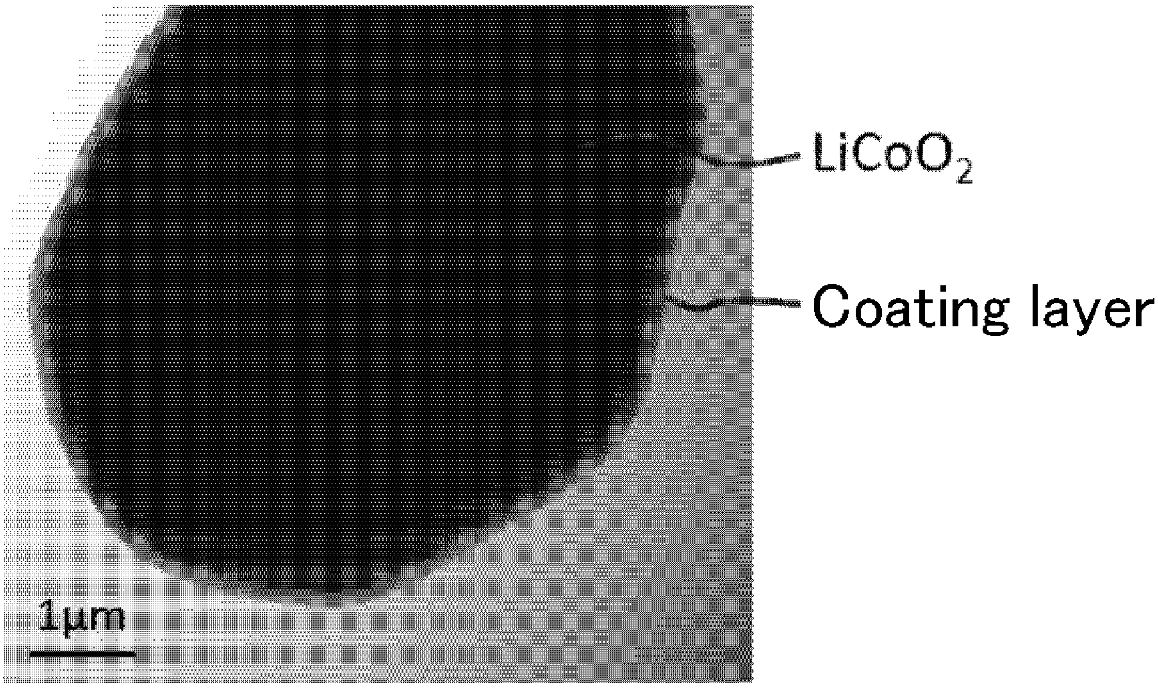
1μm
$LiCoO_2$
Coating layer

FIG.2

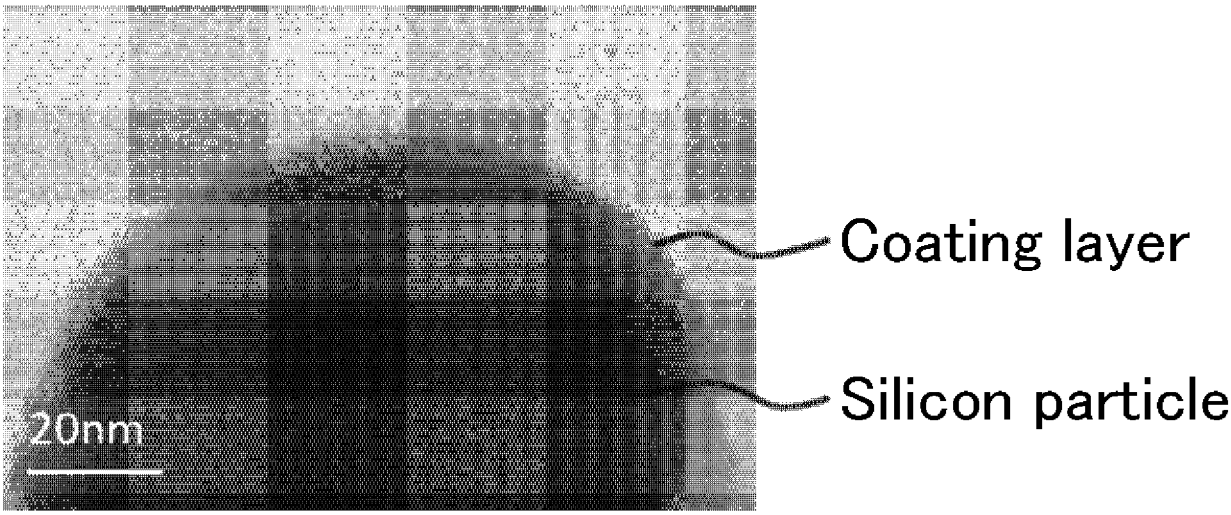
20nm
Coating layer
Silicon particle

## INTERNATIONAL SEARCH REPORT

International application No.
PCT/JP2019/045545

**A. CLASSIFICATION OF SUBJECT MATTER**

H01M 4/36(2006.01)i; H01M 4/505(2010.01)i; H01M 4/525(2010.01)i; H01M 4/58(2010.01)i; H01M 4/62(2006.01)i; H01M 10/052(2010.01)i; H01M 10/0562(2010.01)i

FI: H01M4/36 C; H01M4/505; H01M4/58; H01M4/62 Z; H01M4/0562; H01MI0/052; H01M4/525

According to International Patent Classification (IPC) or to both national classification and IPC

**B. FIELDS SEARCHED**

Minimum documentation searched (classification system followed by classification symbols)

H01M4/36; H01M4/505; H01M4/525; H01M4/58; H01M4/62; H01M10/052; H01M10/0562

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y<br>A | JP 2012-49001 A (TOYOTA MOTOR CORP.) 08.03.2012 (2012-03-08) claims, paragraphs [0034]-[0035] | 1, 7, 11, 13-14<br>2-6<br>8-10, 12 |
| Y | JP 2012-74323 A (MITSUBISHI CHEMICAL CORP.) 12.04.2012 (2012-04-12) paragraph [0030] | 2 |
| Y | WO 2012/157046 A1 (TOYOTA MOTOR CORP.) 22.11.2012 (2012-11-22) paragraphs [0009]-[0011] | 3-6 |
| Y | JP 2015-125877 A (TOYOTA MOTOR CORP.) 06.07.2015 (2015-07-06) paragraph [0046] | 3-6 |
| E, A | WO 2019/240021 A1 (SEKISUI CHEMICAL CO., LTD.) 19.12.2019 (2019-12-19) | 1-14 |

☐ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 14 February 2020 (14.02.2020) | 25 February 2020 (25.02.2020) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**
Information on patent family members

International application No.
PCT/JP2019/045545

| Patent Documents referred in the Report | Publication Date | Patent Family | Publication Date |
|---|---|---|---|
| JP 2012-49001 A | 08 Mar. 2012 | (Family: none) | |
| JP 2012-74323 A | 12 Apr. 2012 | (Family: none) | |
| WO 2012/157046 A1 | 22 Nov. 2012 | (Family: none) | |
| JP 2015-125877 A | 06 Jul. 2015 | (Family: none) | |
| WO 2019/240021 A1 | 19 Dec. 2019 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2012048890 A
- JP 2013069416 A


### Non-patent literature cited in the description


- Richiumu Niji Denchi (Lithium Secondary Battery). Ohmsha Ltd, March 2008, 163-175
- BLACK PEARLS. Cabot Corporation, 2000